Europäisches Patentamt

**European Patent Office**

**Office européen des brevets**

(19)

(11) Publication number: **0 090 782**
**A2**

(12) **EUROPEAN PATENT APPLICATION**

(21) Application number: **83850065.0**

(22) Date of filing: **16.03.83**

(51) Int. Cl.³: **H 02 M 1/14, H 02 M 3/155**

(30) Priority: **25.03.82 SE 8201916**

(43) Date of publication of application: **05.10.83**
**Bulletin 83/40**

(84) Designated Contracting States: **DE FR NL**

(71) Applicant: **TELEFONAKTIEBOLAGET L M ERICSSON,**
**S-126 25 STOCKHOLM (SE)**

(72) Inventor: **Assow, Bengt Holger, Storskiftesväg 66,**
**S-145 60 Norsborg (SE)**
Inventor: **Jansson, Curt Evert, Lingvägen 198,**
**S-123 59 Farsta (SE)**
Inventor: **Rolleberg, Kjell Ove, Ragangen 133,**
**S-145 60 Norsborg (SE)**

(74) Representative: **Wennerholm, Kristian et al,**
**TELEFONAKTIEBOLAGET L M ERICSSON,**
**S-126 25 Stockholm (SE)**

(54) **Flyback DC/DC converter with low ripple in the output capacitor.**

(57) A flyback type DC/DC converter includes an input filter with input capacitor ($C_1$), an inductance (L) in series with a power transistor (T) and an output filter with an output capacitor ($C_2$). The input capacitor ($C_1$) is connected in series with the output capacitor ($C_2$) and to the input terminals of the converter to compensate the ripple current in the output capacitor ($C_2$).

FLYBACK DC/DC CONVERTER WITH LOW RIPPLE IN THE OUTPUT
CAPACITOR

TECHNICAL FIELD

The present invention relates to a flyback DC/DC converter, more specifically
a converter containing a transistor as switching element and also having input
and output filters. Such a converter is used, e.g. as basic circuit in a power pack
for telephone exchange components.

BACKGROUND ART

For rack power in telephone exchanges. it is known to utilize DC/DC converters, which convert the available supply voltage (-48 V) to a smaller and
stabilized value (+5 V). The flyback DC/DC converter of the type mentioned is
suitable because of its small space requirements and few components. As
distinguished from other kinds of converter, a flyback converter has a fewer
number of power semiconductors and magnetic components and is simpler to
operate. It is furthermore simple to provide with several outputs. According to
the principle for such a converter, the power transistor therein is driven to
alternating conducting and non-conducting states. When the transistor is
conducting, energy is stored in the magnetic component (transformer, inductance) and the load is disconnected, while when the transistor is non-conducting,
the magnetic energy of the magnetic component is supplied to the load. In
litterature the flyback converter is also known as a DC/DC converter with
rectification during return or flyback.

There is an output filter for filtering the output voltage, and an input filter for
preventing transients from the switching circuits from reaching the supply
voltage source. Both these filters are usually made up from capacitors, and a
troublesome ripple current can occur, especially in the capacitors of the output
filter.

DISCLOSURE OF INVENTION

The above mentioned problems with ripple currents in the flyback converter can
be solved to a certain extent by complicated dimensioning of the output filter,
where the ripple has the greatest effect. Such a solution is not advantageous
however, since dimensioning of the smoothing filter on the converter output will then require more of components and space.

The object of the present invention is to provide a DC/DC converter of the kind mentioned above, in which measures have been taken for substantially reducing the ripple in the output filter capacitor without complicating the dimensioning of this filter.

The basic idea in the proposed invention is to galvanically connect the input capacitor (included in the input filter) with the output capacitor, such that the ripple in the input capacitor can compensate the ripple in the output capacitor, whereby the latter ripple can be kept low. The invention is thereby characterized by what is disclosed in the characterizing portion of claim 1.

DESCRIPTION OF FIGURES

A known embodiment of a flyback converter, and one in accordance with the invention will be described in detail with reference to the appended drawings.

Figure 1 illustrates in a diagram the basic features of a known flyback converter,

Figure 2 is the circuit diagram of the same kind according to the proposed invention,

Figure 3 is the circuit diagram of an embodiment of the converter according to Figure 2 and

Figure 4 is a time diagram for explaining the function of the converter according to Figures 1-3.

EMBODIMENTS

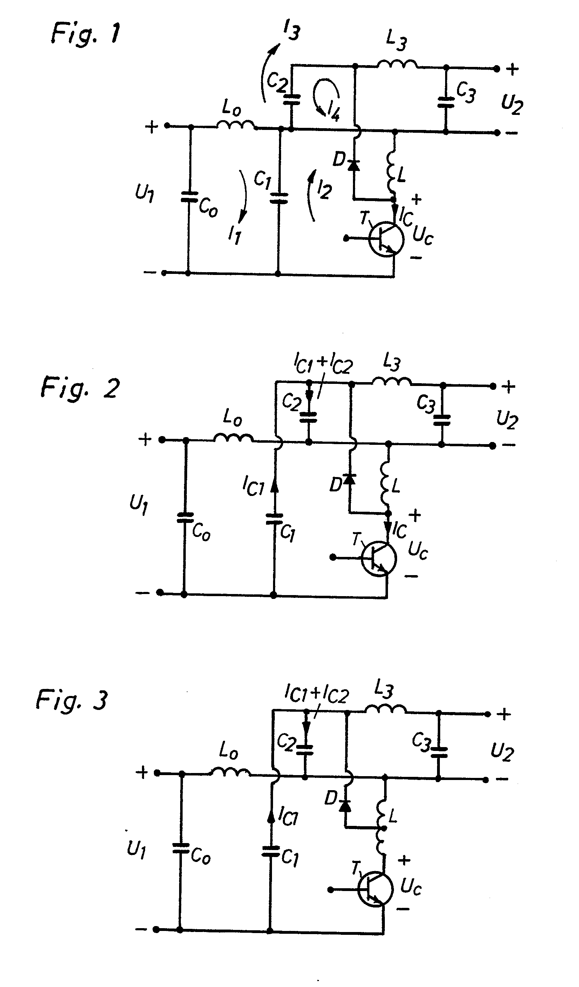

By way of introduction, a flyback converter of known implementation will be described in detail with reference to the Figure 1, and subsequently the converter in accordance with the invention (Figures 2 and 3) will be described.

The basic features of a known flyback converter are apparent from the circuit diagram in Figure 1. The supply voltage is denoted by $U_1$, e.g. -48 V, and is connected across the converter's input filter, which comprises capacitors $C_0$, $C_1$ and the inductance $L_0$. The switching path of the converter in this case comprises a choke L and a power transistor T, of the n-p-n type, connected in series with the choke L. A freewheeling diode D is connected to the collector of transistor T and to one plate of the capacitor $C_2$, which is in turn connected to an output filter comprising the inductance $L_3$ and capacitor $C_3$. The output DC voltage obtained is denoted $U_2$. The control circuits for the transistor T and the feedback circuit from the converter output are, as with Figures 2 and 3, not included, since these do not touch upon the inventive concept.

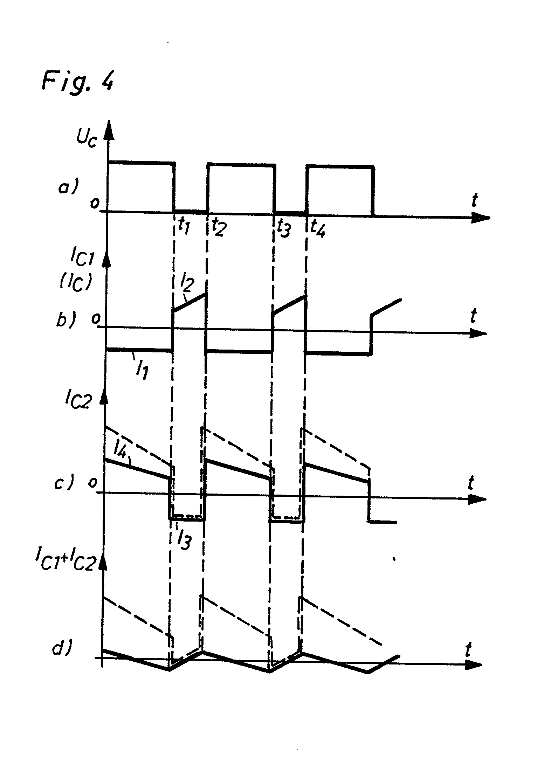

Turning now to the time diagram according to Figure 4, the function of both the known, as well as the proposed converter will be explained in detail from the ripple aspect.

During the time interval $0-t_1$ the transistor T is assumed to be in the off state and its collector voltage $U_c$ is high, see Figure 4a. When the transistor T is in this state a charge current $I_{c1} = I_1$ flows to the capacitor $C_1$ via the input filter $L_0$, $C_0$ from the supply voltage source $U_1$, see Figure 4b. A charge current $I_{c2} = I_4$ simultaneously flows from the inductance L through the diode D to the capacitor $C_2$, see Figure 4c.

When the transistor T is conducting during the interval $T_1-t_2$, its collector voltage $U_c$ in Figure 4a is low. The capacitor $C_1$ is discharged and a current $I_2$ flows from the capacitor $C_1$ through the inductance L and the conducting transistor T, see Figure 4b. The capacitor $C_2$ is simultaneously discharged and a current $I_3$ according to the Figure 4c flows to the output filter $L_3$, $C_3$. The currents $I_1$ and $I_2$ cause a ripple in the capacitor $C_1$ during the respective time interval, and the currents $I_3$ and $I_4$ cause ripple in the capacitor $C_2$ during the corresponding time interval.

According to the inventive idea, the input and output capacitors $C_1$ and $C_2$ are mutually connected, so that one plate of the capacitor $C_1$ is connected to a plate of the capacitor $C_2$, as will be seen from the circuit diagram according to Figure 2. There thus arises a common current path for the capacitors $C_1$ and $C_2$. The circuit is otherwise the same as in Figure 1.

The capacitor $C_1$ is discharged in this case via the capacitor $C_2$ when the transistor T is conducting, and is charged from the converter input when the transistor T is in the off state. The capacitor $C_2$ is discharged when the transistor T is conducting and is charged when the transistor T is in the off state. This gives a ripple current on the capacitor $C_2$, but this current is in counter-phase compared with the ripple current from the capacitor $C_1$. The two counter-directed currents $I_1$ and $I_2$, which charge and discharge the capacitor $C_1$, respectively, will now flow through the capacitor $C_2$ also. The ripple current through the capacitor $C_1$ is also formed here from the currents $I_1$ and $I_2$ during the intervals $0 - t_1$ and $t_1 - t_2$, respectively, but the ripple in the capacitor $C_2$ is formed by $I_1 - I_4$ and $I_2 - I_3$, respectively, which have low value. Figure 4d shows the ripple current $(I_4 - I_1)$ and $(I_2 - I_3)$ during the time intervals $t_0 - t_1$ and $t_1 - t_2$, respectively. The ripple in the output capacitor $C_2$ has thus been substantially reduced, which results in lower demand for filtering via the converter output. The output filter $L_3$, $C_3$ may possibly be dispensed with entirely. By connecting together the input capacitor $C_1$ with the output capacitor $C_2$ in accordance with the above, the ripple in the latter is compensated nearly completely, except for a magnetizing current in the choke L.

If the output voltage is low, an embodiment of the converter according to Figure 3 is advantageous. In this embodiment the diode D is connected to a terminal on the choke L (or a primary winding terminal if the choke L is replaced by a transformer winding), the gain then being $n_1/n_1 + n_2$. For a gain of 1:2 ($n_1 = n_2 = n$), for example, the ripple current in the output capacitor $C_2$ is only compensated by half, which even so signifies about 50 % less ripple or a correspondingly lesser array of capacitors. The capacitor currents are shown in this case with dashed lines in Figures 4c, 4d.

In order that transients across the input voltage $U_1$ will not effect the output voltage $U_2$, the input capacitor $C_1$ must be selected small in comparison with the output capacitor $C_2$. A suitable selection is to have $C_1$ as a paper or plastic film capacitor and $C_2$ as an electrolyte capacitor. If the capacitance of the capacitor $C_1$ is 100 times less than the capacitance of the capacitor $C_2$, a transient across the input voltage $U_1$ will be attenuated about 100 times if no notice is taken of the attenuation of the input filter $L_0$, $C_0$ and the capacity of the controlling circuit included in the converter for regulating the transient.

5

## C L A I M S

1    A flyback type DC/DC converter for converting an incoming DC voltage $(U_1)$ to an outgoing DC voltage $(U_2)$, including an input capacitor $(C_1)$ with a series connection of a controllable switch (T) and an inductance (L) connected in parallel with the input capacitor, and an output capacitor $(C_2)$ connected to the inductance, characterized in that the input capacitor $(C_1)$ is connected to one input terminal of the converter and to the output capacitor $(C_2)$ so that during the switching cycle the ripple current $(I_{C1})$ from the input capacitor compensates the ripple current $(I_{C2})$ through the output capacitor $(C_2)$.

2    Converter as claimed in claim 1, characterized in that said compensation is provided by the input capacitor $(C_1)$ being connected in series with the output capcacitor $(C_2)$ and to the other input terminal of the converter.

3    Converter as claimed in claim 2, characterized in that an input filter including an inductance $(L_o)$ in the series branch and a capacitance $(C_o)$ in the parallel branch is connected across the converter's input terminals and that the input capacitor $(C_1)$ and output capacitor $(C_2)$ are connected in series to the inductance $(L_o)$ of the input filter.

**Fig. 1**

**Fig. 2**

**Fig. 3**

**Fig. 4**